# EUROPÄISCHE PATENTSCHRIFT

(11) **EP 2 171 555 B1**
(45) Veröffentlichungstag und Bekanntmachung des Hinweises auf die Patenterteilung: **31.10.2012**
(21) Anmeldenummer: 08786157.1
(22) Anmeldetag: 15.07.2008
(51) Int. Cl.: G05B 23/02, F16K 37/00

(54) **STELLEINRICHTUNG FÜR EIN AUF/ZU-VENTIL**
ACTUATING DEVICE FOR AN ON/OFF VALVE
DISPOSITIF DE RÉGLAGE POUR UNE SOUPAPE MARCHE/ARRÊT

(30) Priorität: 20.07.2007 DE 102007034059
(43) Veröffentlichungstag der Anmeldung: 07.04.2010
(73) Patentinhaber: Siemens Aktiengesellschaft, 80333 München (DE)
(72) Erfinder: HEER, Klaus-Peter, 76863 Herxheim (DE); HIRSCH, Volker, 76889 Steinfeld (DE)
(86) Internationale Anmeldenummer: PCT/EP2008/059255
(87) Internationale Veröffentlichungsnummer: WO 2009/013184

(56) Entgegenhaltungen:
- EP-A- 1 500 857
- DE-A1-102005 004 477
- DE-A1-102006 003 750

## Beschreibung

Die Erfindung betrifft eine Stelleinrichtung für ein Auf/Zu-Ventil, mit einem pneumatischen Antrieb, der über ein Magnetventil an einer Druckluftversorgung angeschlossen ist, wobei das Magnetventil bei Ansteuerung mit einer Steuerspannung den pneumatischen Antrieb mit der Druckluft belüftet und bei Nichtvorhandensein der Steuerspannung den pneumatischen Antrieb entlüftet und wobei der pneumatische Antrieb das Ventil bei Belüftung in eine Betriebsstellung und bei Entlüftung in eine Sicherheitsstellung bewegt, und mit Mitteln zur Durchführung eines Partial-Stroke-Tests.

Bei einer derartigen aus der DE 10 2006 003 750 A1 oder der DE 10 2005 004 477 A1 bekannten Stelleinrichtung wird ein pneumatisches Auf/Zu-Ventil, insbesondere ein Notabschalt-(ESD = Emergency Shut Down)-Ventil, mittels eines pneumatischen Antriebs entweder in eine Betriebsstellung, z. B. "auf", oder eine Sicherheitsstellung, z. B. "zu", gebracht. Ein Magnetventil, das mit einer von einem Leitsystem gelieferten Steuerspannung angesteuert wird, verbindet den pneumatischen Antrieb mit einer Druckluftversorgung. Im Notfall wird die Steuerspannung abgeschaltet, um den pneumatischen Antrieb über das Magnetventil zu entlüften, so dass das Ventil aus der Betriebsstellung in die Sicherheitsstellung bewegt wird.

Um die Funktionsfähigkeit der Stelleinrichtung im Rahmen eines Partial-Stroke-Tests überprüfen zu können, ist ein zusätzlicher Stellungsregler an dem pneumatischen Antrieb angebaut. Bei dem Partial-Stroke-Test wird das Ventil mittels des Stellungsreglers aus der Betriebsstellung über einen Teil seines Stellweges bewegt und anschließend wieder zurückbewegt. Die Stellungsänderung ist dabei so gering, dass der laufende Betrieb der Anlage, in der das Stellventil eingebaut ist, nicht unterbrochen werden muss und nur unwesentlich gestört wird. Während des Partial-Stroke-Tests wird die Stellbewegung erfasst und abgespeichert. In dem Leitsystem muss für die Ansteuerung des Stellungsreglers eine Analogausgangsbaugruppe bereitgestellt werden, die z. B. ein 4-20 mA-Signal liefert, um den Sollwert für die Ventilsteuerung zu übermitteln. Soweit die Auswertung des Tests nicht in dem Stellungsregler selbst erfolgt, muss weiterhin in dem Leitsystem eine Analogeingangsbaugruppe bereitgestellt, an die der Stellungsregler die von ihm erfassten Positionsdaten übermittelt.

Das Vorsehen eines Stellungsreglers nur für den Partial-Stroke-Test ist sowohl in materieller als auch finanzieller Hinsicht ein hoher Aufwand. Hinzu kommt, dass zwar die Armatur bestehend aus Ventil und pneumatischem Antrieb mittels des Stellungsreglers und des von ihm durchgeführten Partial-Stroke-Tests getestet werden kann, nicht aber das Magnetventil, welches eines weiteren Testverfahrens bedarf.

Bei einer aus der EP 1 500 857 A1 bekannten Stelleinrichtung für ein Auf/Zu-Ventil ist ebenfalls ein pneumatischer Antrieb über ein Magnetventil an einer Druckluftversorgung angeschlossen. Zur Durchführung eines Partial-Stroke-Tests sendet ein Ventiltestmodul ein elektrisches Signal an das Magnetventil, um den pneumatischen Antrieb von der Druckluftversorgung abzuschalten. Sobald das sich aus der Betriebsstellung in Richtung einer Sicherheitsstellung bewegende Ventil eine vorgegebene Position erreicht, wird dies mittels eines Positionsschalters erfasst und an das Ventiltestmodul gemeldet. Wenn die vorgegebene Position erreicht wird oder dies nicht innerhalb einer vorgegebenen Zeit erfolgt ist, sendet das Ventiltestmodul ein elektrisches Signal an das Magnetventil, um den Test zu beenden und den pneumatischen Antrieb wieder an die Druckluftversorgung zu schalten. Im Falle einer Fehlfunktion des Ventiltestmoduls kann es passieren, dass der Test nicht beendet wird und das Ventil in die Sicherheitsstellung fährt.

Der Erfindung liegt daher die Aufgabe zugrunde, mit möglichst einfachen Mitteln eine sichere Durchführung von Partial-Stroke-Tests an pneumatisch angetriebenen Auf/Zu-Ventilen zu ermöglichen.

Gemäß der Erfindung wird das Problem dadurch gelöst, dass bei der Stelleinrichtung der eingangs angegebenen Art die Mittel zur Durchführung des Partial-Stroke-Tests einen steuerbaren Schalter aufweisen, der im Ruhezustand geschlossen ist und dabei die Steuerspannung dem Magnetventil zuführt und durch ein zur Durchführung des Partial-Stroke-Tests erzeugtes Steuersignal geöffnet wird, und dass das Steuersignal dem steuerbaren Schalter über einen Positionsschalter zugeführt wird, der in der Betriebsstellung des Ventils geschlossen ist und geöffnet wird, wenn das Ventil eine vorgegebene Position in Richtung der Sicherheitsstellung erreicht.

Als Reaktion auf das z. B. von einem Leitsystem erzeugte Steuersignal unterbricht der steuerbare Schalter die Spannungsversorgung des Magnetventils, so dass dieses deaktiviert und in Folge der pneumatische Antrieb entlüftet wird. Daraufhin bewegt sich das Ventil aus der Betriebsstellung heraus bis zu der vorgegebenen Position, bei deren Erreichen der Positionsschalter öffnet und den Weg des Steuersignals zu dem steuerbaren Schalter hin unterbricht. Der steuerbare Schalter schließt daher wieder die Spannungsversorgung für das Magnetventil, welches dadurch aktiviert die pneumatische Verbindung zwischen dem Stellungsregler und der Druckluftversorgung wieder herstellt, so dass die Bewegung des Ventils gestoppt und umgekehrt wird. Die vorgegebene Stellung, bei der der Positionsschalter öffnet, ist so gewählt, dass der laufende Betrieb der Anlage, in der das Ventil eingebaut ist, durch die Ventilbewegung während des Tests nur unwesentlich gestört wird. Neben der sehr einfachen und kostengünstigen Realisierung der Mittel zur Durchführung des Partial-Stroke-Tests besteht ein weiterer Vorteil der erfindungsgemäßen Stelleinrichtung darin, dass mit dem Partial-Stroke-Test nicht nur die Funktion der aus Ventil und pneumatischem Antrieb bestehenden Armatur sondern auch das Magnetventil getestet werden.

Zur Auswertung des Tests kann z. B. der aus dem Steuersignal (Spannungssignal) resultierende Strom gemessen werden, der jedes Mal dann unterbrochen wird, wenn das Ventil die vorgegebene Position erreicht, bei der der Positionsschalter öffnet. Alternativ kann das Steuersignal zwischen dem Positionsschalter und dem steuerbaren Schalter an einen Meldeausgang geführt werden.

Es ist wünschenswert, den Partial-Stroke-Test automatisch durch ein Leitsystem veranlassen, überwachen und auswerten zu können. Da jedoch die meisten Auf/Zu-Ventile sehr schnell reagieren müssen, um im Notfall einen Fluidstrom abstellen zu können, sind die Rechenzykluszeiten von Leitsystemen in der Regel zu lang, um den Ablauf eines Partial-Stroke-Tests unmittelbar zu steuern und auszuwerten. Ein weiterer Vorteil der erfindungsgemäßen Stelleinrichtung besteht nun darin, dass der Test unabhängig von der jeweiligen Rechenzykluszeit des Leitsystems einerseits und der Reaktionsgeschwindigkeit des Stellgeräts andererseits durchgeführt werden kann. Die Dauer des von dem Leitsystem erzeugten Steuersignals ist unkritisch, weil in jedem Fall die Bewegung des Ventils gestoppt und umgekehrt wird, wenn es die vorgegebene Position erreicht. Dabei wird das Steuersignal vorzugsweise so lange erzeugt, dass das Ventil mehrfach um die vorgegebene Position pendelt. Dies ergibt sich daraus, dass das Ventil nach Erreichen der vorgegebenen Position wieder zurückbewegt wird, so dass der Positionsschalter wieder schließt; dann wird das anstehende Steuersignal wieder zu dem steuerbaren Schalter durchgeschaltet, so dass dieser öffnet, das Magnetventil deaktiviert wird und das Ventil wieder zu der vorgegebenen Position bewegt wird. Dieser Vorgang wiederholt sich solange, wie das Steuersignal erzeugt wird, so dass das Ventil um die vorgegebene Position pendelt. Für die Auswertung des Tests, also die oben erwähnte Auswertung des aus dem Steuersignal resultierenden Stroms oder die Auswertung des an den Meldeausgang geführten Steuersignals ist die jeweilige Rechenzykluszeit des Leitsystems unkritisch, weil das Steuersignal nur ausreichend lang erzeugt werden muss.

Aus der Pendelbewegung (Frequenz) des Ventils während des Tests kann auf den technischen Zustand der Stelleinrichtung geschlossen werden. Dazu kann in besonders einfacher Weise das Puls-Pausen-Verhältnis des hinter dem Positionsschalter dem steuerbaren Schalter zugeführten Steuersignals bzw. des resultierenden Stroms erfasst und ausgewertet werden. So kann beispielsweise das bei einer neuen Stelleinrichtung erfasste Puls-Pausen-Verhältnis in dem Leitsystem abgespeichert werden und als Referenzmuster für bei späteren Tests erfasste Puls-Pausen-Verhältnisse dienen, wobei die Abweichungen von dem Referenzmuster Veränderungen des technischen Zustands der Stelleinrichtung und ggf. einen Wartungsbedarf signalisieren.

Um sicher zu stellen, dass es beispielsweise bei einem Defekt des Positionsschalters nicht zu unkontrolliert großen Positionsänderungen des Ventils kommt, kann in Reihenschaltung mit dem Positionsschalter ein weiterer Positionsschalter angeordnet werden, der in der Betriebsstellung des Ventils geschlossen ist und geöffnet wird, wenn das Ventil in Richtung der Sicherheitsstellung über die vorgegebene Position hinaus eine weitere vorgegebene Position erreicht. Alternativ oder ergänzend kann in Reihenschaltung mit dem Positionsschalter ein Druckschalter angeordnet werden, der den Druck in dem pneumatischen Antrieb überwacht und bei Unterschreiten eines Mindestdrucks öffnet und so den Partial-Stroke-Test abbricht.

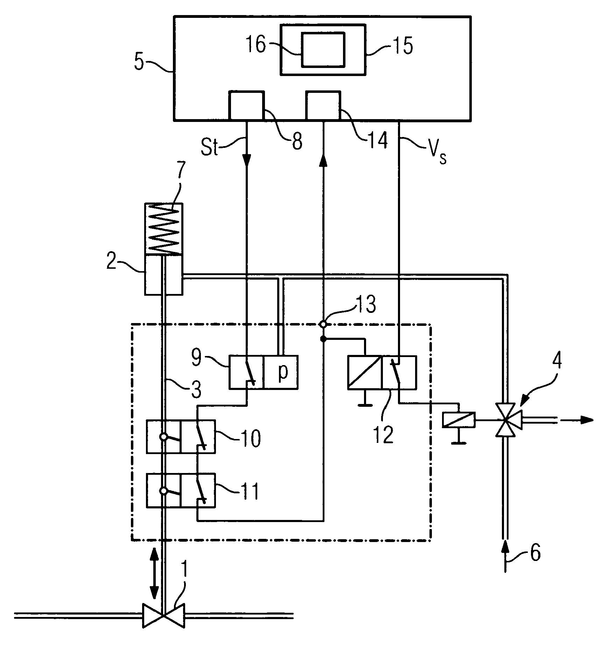

Zur weiteren Erläuterung der Erfindung wird im Folgenden auf die einzige Figur der Zeichnung Bezug genommen, die ein Ausführungsbeispiel der erfindungsgemäßen Stelleinrichtung zeigt.

Die dargestellte Stelleinrichtung weist ein Auf/Zu-Ventil 1 auf, das mittels eines pneumatischen Antriebs 2 über ein Stellelement 3, hier in Form einer Hubstange, entweder in eine Betriebsstellung, z. B. "auf", oder eine Sicherheitsstellung, z. B. "zu", gebracht werden kann. Ein Magnetventil 4, das mit einer von einem Leitsystem 5 gelieferten Steuerspannung Vₛ angesteuert wird, verbindet den pneumatischen Antrieb 2 mit einer Druckluftversorgung 6. Im Notfall wird die Steuerspannung Vₛ abgeschaltet, um den pneumatischen Antrieb 2 über das Magnetventil 4 zu entlüften. Der pneumatische Antrieb 2 wird daraufhin drucklos und bewegt das Stellelement 3 mit dem Ventil 1, beispielsweise unter Einwirkung einer Feder 7, aus der Betriebsstellung in die Sicherheitsstellung.

Um die Funktionsfähigkeit der Stelleinrichtung im Rahmen eines Partial-Stroke-Tests überprüfen zu können, erzeugt das Leitsystem 5 zu vorgegebenen Zeiten an einem Binärausgang 8 ein Steuersignal St, das über einen Druckschalter 9, einen Positionsschalter 10 und einen weiteren Positionsschalter 11, die alle in Reihe geschaltet sind, an einen steuerbaren Schalter 12 geführt wird. Der steuerbare Schalter 12, hier ein Relais, ist bei Nichtansteuerung geschlossen und schaltet dabei das Magnetventil 4 an die Steuerspannung Vₛ. Bei Ansteuerung durch das Steuersignal St wird der steuerbare Schalter 12 geöffnet und unterbricht die Spannungsversorgung des Magnetventils 4. Dieses entlüftet daraufhin den pneumatischen Antrieb 2, so dass das Stellelement 3 mit dem Ventil 1 aus der Betriebsstellung heraus in Richtung der Sicherheitsstellung bewegt wird. Nach einer Bewegung, die so kurz bemessen ist, dass der laufende Betrieb der Anlage, in der das Ventil 1 eingebaut ist, nur unwesentlich gestört wird, erreicht das Ventil 1 eine vorgegebene Position, bei der der Positionsschalter 10 geöffnet wird und den Weg des Steuersignals St zu dem steuerbaren Schalter 12 hin unterbricht. Der steuerbare Schalter 12 schließt daher wieder die Spannungsversorgung für das Magnetventil 4, welches dadurch aktiviert die pneumatische Verbindung zwischen der Druckluftversorgung 6 und dem pneumatischen Antrieb 2 wieder herstellt, so dass die Bewegung des Ventils 1 gestoppt und umgekehrt wird. Dies führt dazu, dass der Positionsschalter 10 wieder schließt und das anstehende Steuersignal St wieder zu dem steuerbaren Schalter 12 durchschaltet, so dass dieser wieder öffnet, das Magnetventil 4 deaktiviert wird und das Ventil 1 wieder zu der vorgegebenen Position bewegt wird. Dieser Vorgang wiederholt sich solange, wie das Leitsystem 5 das Steuersignal St erzeugt, so dass das Ventil 1 um die vorgegebene Position pendelt.

Während das Ventil 1 um die vorgegebene Position pendelt, wird das Steuersignal St im Bereich zwischen den Druck- bzw. Positionsschaltern 9, 10, 11 und dem steuerbaren Schalter 12 über einen Meldeausgang 13 einem Binäreingang 14 des Leitsystems 5 zugeführt, das in einer Auswerteeinrichtung 15 das Puls-Pausen-Verhältnis des erfassten Signals auswertet. Alternativ kann an dem Binärausgang 8 der zu dem Steuersignal St gehörende Strom ausgewertet werden. Im Neuzustand der Stelleinrichtung kann das erfasste Puls-Pausen-Verhältnis als Referenz in einen Speicher 16 des Leitsystems 5 hinterlegt werden. Im späteren Betrieb der Stelleinrichtung wird das dann bei einem Partial-Stroke-Test erfasste Puls-Pausen-Verhältnis mit der Referenz verglichen, um Veränderungen des technischen Zustands der Stelleinrichtung zu erkennen.

Um sicher zu stellen, dass es beispielsweise bei einem Defekt des Positionsschalters nicht zu unkontrolliert großen Positionsänderungen des Ventils 1 kommt, ist in Reihenschaltung mit dem Positionsschalter 10 der weitere Positionsschalter 11 angeordnet, der öffnet, wenn das Ventil 1 über die durch den Positionsschalter 10 vorgegebene Position hinaus eine weitere vorgegebene Position erreicht. Weiterhin überwacht der ebenfalls in Reihe mit dem Positionsschalter 10 liegende Druckschalter 9 den Druck in dem pneumatischen Antrieb 2 und öffnet bei Unterschreiten eines Mindestdrucks, um den Partial-Stroke-Test abzubrechen.

## Patentansprüche

1. Stelleinrichtung für ein Auf/Zu-Ventil (1), mit einem pneumatischen Antrieb (2), der über ein Magnetventil (4) an einer Druckluftversorgung (6) angeschlossen ist, wobei das Magnetventil (4) bei Ansteuerung mit einer Steuerspannung (Vₛ) den pneumatischen Antrieb (2) mit der Druckluft belüftet und bei Nichtvorhandensein der Steuerspannung (Vₛ) den pneumatischen Antrieb (2) entlüftet und wobei der pneumatische Antrieb (2) das Ventil (1) bei Belüftung in eine Betriebsstellung und bei Entlüftung in eine Sicherheitsstellung bewegt, und mit Mitteln zur Durchführung eines Partial-Stroke-Tests, **dadurch gekennzeichnet,**
**dass** die Mittel zur Durchführung des Partial-Stroke-Tests einen steuerbaren Schalter (12) aufweisen, der im Ruhezustand geschlossen ist und dabei die Steuerspannung (Vₛ) dem Magnetventil (4) zuführt und durch ein zur Durchführung des Partial-Stroke-Tests erzeugtes Steuersignal (St) geöffnet wird, und
**dass** das Steuersignal (St) dem steuerbaren Schalter (12) über einen Positionsschalter (10) zugeführt wird, der in der Betriebsstellung des Ventils (1) geschlossen ist und geöffnet wird, wenn das Ventil (1) eine vorgegebene Position in Richtung der Sicherheitsstellung erreicht.

2. Stelleinrichtung nach Anspruch 1, **dadurch gekennzeichnet, dass** das Steuersignal (St) so lange erzeugt wird, dass das Ventil (1) mehrfach um die vorgegebene Position pendelt.

3. Stelleinrichtung nach Anspruch 1 oder 2, **dadurch gekennzeichnet, dass** das Steuersignal (St) zwischen dem Positionsschalter (10) und dem steuerbaren Schalter (12) an einen Meldeausgang (13) geführt ist.

4. Stelleinrichtung nach Anspruch 3, **dadurch gekennzeichnet, dass** an dem Meldeausgang (13) eine Auswerteeinrichtung (15) zur Auswertung des Puls-Pausen-Verhältnisses des zugeführten Steuersignals (St) angeschlossen ist.

5. Stelleinrichtung nach einem der vorangehenden Ansprüche, **dadurch gekennzeichnet, dass** in Reihe mit dem Positionsschalter (10) ein weiterer Positionsschalter (11) liegt, der in der Betriebsstellung des Ventils (1) geschlossen ist und geöffnet wird, wenn das Ventil (1) in Richtung der Sicherheitsstellung über die vorgegebene Position hinaus eine weitere vorgegebene Position erreicht.

6. Stelleinrichtung nach einem der vorangehenden Ansprüche, **dadurch gekennzeichnet, dass** in Reihe mit dem Positionsschalter (10) ein Druckschalter (9) liegt, der den Druck in dem pneumatischen Antrieb (2) überwacht und bei Unterschreiten eines Mindestdrucks geöffnet wird.

## Claims

1. Actuating device for an on/off valve (1), with a pneumatic drive (2) which is connected via a solenoid valve (4) to a compressed-air supply (6), the solenoid valve (4), when activated by a control voltage (Vₛ), aerating the pneumatic drive (2) with the compressed air and, in the absence of the control voltage (Vₛ), deaerating the pneumatic drive (2), the pneumatic drive (2), when aerated, moving the valve (1) into an operating position and, when deaerated, moving the said valve into a safety position, and with means for carrying out a partial stroke test, **characterized in that** the means for carrying out the partial stroke test have a controllable switch (12) which is closed in the state of rest and in this case feeds the control voltage (Vₛ) to the solenoid valve (4) and which is opened by means of a control signal (St) generated for carrying out the partial stroke test, and **in that** the control signal (St) is fed to the controllable switch (12) via a position switch (10) which is closed in the operating position of the valve (1) and is opened when the valve (1) reaches a stipulated position in the direction of the safety position.

2. Actuating device according to Claim 1, **characterized in that** the control signal (St) is generated for so long that the valve (1) oscillates more than once about the stipulated position.

3. Actuating device according to Claim 1 or 2, **characterized in that** the control signal (St) is led between the position switch (10) and the controllable switch (12) to a message output (13).

4. Actuating device according to Claim 3, **characterized in that** an evaluation device (15) for evaluating the pulse/pause ratio of the fed control signal (St) is connected to the message output (13).

5. Actuating device according to one of the preceding claims, **characterized in that** a further position switch (11) lies in series with the position switch (10) and is closed in the operating position of the valve (1) and is opened when the valve (1) reaches a further stipulated position beyond the stipulated position in the direction of the safety position.

6. Actuating device according to one of the preceding claims, **characterized in that** a pressure switch (9) lies in series with the position switch (10), monitors the pressure in the pneumatic drive (2) and is opened when a minimum pressure is undershot.

## Revendications

1. Dispositif de réglage d'une soupape (1) marche/arrêt comprenant un entraînement (2) pneumatique qui est raccordé à une alimentation (6) en air comprimé par une électrovanne (4), l'électrovanne (4) alimentant en air comprimé l'entraînement (2) pneumatique lorsqu'elle est commandée par une tension (Vₛ) de commande et mettant l'entraînement (2) pneumatique à l'atmosphère lorsque la tension (Vₛ) de commande n'est pas présente et dans lequel l'entraînement (2) pneumatique déplace la vanne, lors d'une alimentation, pour la faire venir dans une position de fonctionnement et, lors d'une mise à l'atmosphère, pour la faire venir dans une position de sécurité, et comprenant des moyens pour effectuer un test partial-stroke,
**caractérisé**
**en ce que** les moyens pour effectuer le test partial-stroke comporte un commutateur (12) qui peut être commandé et qui est fermé dans l'état de repos et applique ainsi la tension (Vₛ) de commande à l'électrovanne (4) et est ouvert par un signal (St) de commande produit pour effectuer le test partial-stroke, et
**en ce que** le signal (St) de commande est envoyé au commutateur (12) pouvant être commandé par l'intermédiaire d'un commutateur (10) de position, qui est fermé à la position de fonctionnement de la soupape (10) et qui est ouvert lorsque la soupape (1) atteint une position prescrite en direction de la position de sécurité.

2. Dispositif de réglage suivant la revendication 1, **caractérisé en ce que** le signal (St) de commande est produit tant que la soupape (1) bat plusieurs fois autour de la position prescrite.

3. Dispositif de réglage suivant la revendication 1 ou 2, **caractérisé en ce que** le signal (St) de commande est envoyé à une sortie (13) d'avertissement entre le commutateur (10) de position et le commutateur (12) pouvant être commandé.

4. Dispositif de réglage suivant la revendication 3, **caractérisé en ce qu'**à la sortie (13) d'avertissement est raccordé un dispositif (15) d'exploitation pour l'exploitation du rapport impulsion-intervalle entre les impulsions du signal (S) de commande envoyé.

5. Dispositif de réglage suivant l'une des revendications précédentes, **caractérisé en ce qu'**en série avec le commutateur (10) de position est monté un autre commutateur (11) de position, qui est fermé dans l'état de fonctionnement de la soupape (1) et qui est ouvert lorsque la soupape (1) atteint une autre position prescrite au-delà de la position prescrite dans la direction de la position de sécurité.

6. Dispositif de réglage suivant l'une des revendications précédentes, **caractérisé en ce qu'**en série avec le commutateur (10) de position est monté un commutateur (9) de pression, qui contrôle la pression dans l'entraînement (2) pneumatique et qui est ouvert lorsque la pression devient inférieure à une pression minimum.
